# EUROPEAN PATENT APPLICATION

(11) **EP 4 683 022 A1**
(43) Date of publication of application: **21.01.2026**
(21) Application number: 25167234.1
(22) Date of filing: 30.03.2025
(51) Int. Cl.: H01M 10/04, H01M 10/615, H01M 50/618, H01M 50/673

(54) **BATTERY STANDING METHOD AND DEVICE**

(30) Priority: 14.06.2024 CN 202410769494
(71) Applicant: Greensun Inc., Shenzhen (CN)
(72) Inventor: LU, Shuli, Shenzhen (CN); LUO, Chenghua, Shenzhen (CN); ZHANG, Jin, Shenzhen (CN); ZHENG, Junhui, Shenzhen (CN); FANG, Changshu, Shenzhen (CN); LIN, Peng, Shenzhen (CN); ZHAO, Yuanqing, Shenzhen (CN)
(74) Representative: JD&P Patent Attorneys Joanna Dargiewicz & Partners

(57) **Abstract**

Disclosed are a battery standing method and device, and the battery standing method comprises the following steps: S1: putting a battery subjected to electrolyte injection into an electrolyte injection capsule, and then transferring the electrolyte injection capsule and the battery in the electrolyte injection capsule to a first transfer conveying line; S2: conveying the electrolyte injection capsule and the battery in the electrolyte injection capsule to a standing unit through the first transfer conveying line; S3: transporting the electrolyte injection capsule on the first transfer conveying line and the battery in the electrolyte injection capsule into a standing cavity of the standing unit, and electrically connecting an auxiliary energizing mechanism on the standing cavity with a positive electrode probe and a negative electrode probe of the electrolyte injection capsule; and S4: connecting the auxiliary energizing mechanism on the standing cavity with a power supply to supply power to a heating plate of the electrolyte injection capsule, and energizing the heating plate to heat the battery in the electrolyte injection capsule. According to the invention, an electrolyte injected into the battery can rapidly and fully infiltrate an interior of a cell of the battery, so that the production efficiency is improved.

## Description

### TECHNICAL FIELD

The present invention relates to the technical field of battery production, in particular to a battery standing method and device.

### BACKGROUND OF THE PRESENT INVENTION

After an electrolyte is injected into a battery during battery production, it is usually necessary to allow the battery to stand, so that the electrolyte can infiltrate an interior of a cell of the battery. At present, the battery subjected to electrolyte injection is usually put on a standing frame for standing, and because the battery absorbs the electrolyte slowly under natural conditions, it takes a long time to achieve full infiltration, which reduces the production efficiency.

### SUMMARY OF THE PRESENT INVENTION

In order to overcome the defects in the prior art, the present invention provides a battery standing method and device, in which an electrolyte injected into a battery can rapidly and fully infiltrate an interior of a cell of the battery, so that the production efficiency is improved.

The technical solutions used in the present invention to solve the technical problems are as follows.

In a first aspect of the present invention, a battery standing method is provided, which comprises the following steps: S1: putting a battery subjected to electrolyte injection into an electrolyte injection capsule, and then transferring the electrolyte injection capsule and the battery in the electrolyte injection capsule to a first transfer conveying line; S2: conveying the electrolyte injection capsule and the battery in the electrolyte injection capsule to a standing unit through the first transfer conveying line; S3: transporting the electrolyte injection capsule on the first transfer conveying line and the battery in the electrolyte injection capsule into a standing cavity of the standing unit, and electrically connecting an auxiliary energizing mechanism on the standing cavity with a positive electrode probe and a negative electrode probe of the electrolyte injection capsule; S4: connecting the auxiliary energizing mechanism on the standing cavity with a power supply to supply power to a heating plate of the electrolyte injection capsule, and energizing the heating plate to heat the battery in the electrolyte injection capsule; S5: docking a positive-negative pressure circulating mechanism on the standing cavity with an air inlet of the electrolyte injection capsule and plugging an electrolyte injection port of the electrolyte injection capsule, connecting the positive-negative pressure circulating mechanism with a vacuumizing device, and vacuumizing an interior of the electrolyte injection capsule and introducing nitrogen through the positive-negative pressure circulating mechanism by the vacuumizing device alternately to vacuumize an interior of the battery in the electrolyte injection capsule and introduce nitrogen alternately; S6: disconnecting the auxiliary energizing mechanism from the power supply and disconnecting the positive-negative pressure circulating mechanism from the vacuumizing device, separating the positive-negative pressure circulating mechanism from the air inlet of the electrolyte injection capsule and the electrolyte injection port of the electrolyte injection capsule, and then transporting the electrolyte injection capsule in the standing cavity and the battery in the electrolyte injection capsule to a second transfer conveying line; and S7: conveying the electrolyte injection capsule and the battery in the electrolyte injection capsule to a next process through the second transfer conveying line.

As a preferred technical solution, in the step S3, the electrolyte injection capsule on the first transfer conveying line and the battery in the electrolyte injection capsule are transported to a placing area at a bottom portion of the standing cavity.

As a preferred technical solution, in the step S3, an upper end of a first probe of the auxiliary energizing mechanism is electrically connecting with the positive electrode probe of the electrolyte injection capsule and an upper end of a second probe of the auxiliary energizing mechanism is electrically connecting with the negative electrode probe of the electrolyte injection capsule, in the step S4, a lower end of the first probe and a lower end of the second probe of the auxiliary energizing mechanism are respectively connected with the power supply, and in the step S6, the lower end of the first probe and the lower end of the second probe of the auxiliary energizing mechanism are disconnected from the power supply.

As a preferred technical solution, in the step S4, the heating plate heats the battery in the electrolyte injection capsule at a heating temperature of 40°C to 50°C.

As a preferred technical solution, the step S5 comprises the following steps: S51: driving a venting block and a plugging block to move close to the electrolyte injection capsule by a lifting cylinder of the positive-negative pressure circulating mechanism, so that a tail end of the venting block is matched with the air inlet of the electrolyte injection capsule and a tail end of the plugging block is matched with the electrolyte injection port of the electrolyte injection capsule to dock with the air inlet of the electrolyte injection capsule and plug the electrolyte injection port of the electrolyte injection capsule; S52: connecting a standing joint of the positive-negative pressure circulating mechanism with the vacuumizing device; S53: introducing nitrogen into an interior of the electrolyte injection capsule through the standing joint and the venting block of the positive-negative pressure circulating mechanism by the vacuumizing device to introduce the nitrogen into the interior of the battery in the electrolyte injection capsule, so that a positive pressure is generated in the interior of the battery, the pressure is 0.3 MPa to 0.5 MPa, and the pressure is kept for 3 hours to 4 hours; S54: vacuumizing the interior of the electrolyte injection capsule through the standing joint and the venting block of the positive-negative pressure circulating mechanism by the vacuumizing device to vacuumize the interior of the battery in the electrolyte injection capsule, so that a negative pressure is generated in the interior of the battery, the pressure is -55 Kpa to -65 Kpa, and the pressure is kept for 0.2 hour to 1 hour; and S55: repeating the step S53 to the step S54 for 4 to 6 times.

In a second aspect of the present invention, a battery standing device is provided, which comprises a standing unit, a first transfer conveying line and a second transfer conveying line, wherein the standing unit is located between the first transfer conveying line and the second transfer conveying line, the standing unit comprises a standing stereoscopic storage, the standing stereoscopic storage comprises a standing cavity, the standing cavity is used for placing an electrolyte injection capsule and a battery in the electrolyte injection capsule, and an auxiliary energizing mechanism and a positive-negative pressure circulating mechanism are arranged on the standing cavity.

As a preferred technical solution, a bottom portion of the standing cavity is provided with a standing bottom plate, a top end of the standing bottom plate is provided with a standing top plate, and a top end of the standing top plate is provided with a placing area.

As a preferred technical solution, the auxiliary energizing mechanism comprises a first probe assembly and a second probe assembly, the first probe assembly comprises a first probe sleeve and a first probe penetrating through the first probe sleeve, the top end of the standing bottom plate is provided with a first mounting groove, a bottom portion of the first mounting groove is provided with a first hole position, the top end of the standing top plate is provided with a first avoidance hole corresponding to the first mounting groove, the first probe sleeve is arranged in the first mounting groove, an upper end of the first probe penetrates through the first avoidance hole and is located in the placing area, the upper end of the first probe is used for electrically connecting with a positive electrode probe of the electrolyte injection capsule, a lower end of the first probe penetrates through the first hole position and is located in a lower vacant position at the bottom portion in the standing cavity, the lower end of the first probe is used for electrically connecting with a positive electrode of the power supply, the second probe assembly comprises a second probe sleeve and a second probe penetrating through the second probe sleeve, a top end of the standing bottom plate is provided with a second mounting groove, a bottom portion of the second mounting groove is provided with a second hole position, a top end of the standing top plate is provided with a second avoidance hole corresponding to the second mounting groove, the second probe sleeve is arranged in the second mounting groove, an upper end of the second probe penetrates through the second avoidance hole and is located in the placing area, the upper end of the second probe is used for electrically connecting with a negative electrode probe of the electrolyte injection capsule, a lower end of the second probe penetrates through the second avoidance hole and is located in the lower vacant position at the bottom portion in the standing cavity, and the lower end of the second probe is used for electrically connecting with a negative electrode of the power supply.

As a preferred technical solution, the top end of the standing bottom plate is provided with a positioning pin, a bottom portion of the placing area is provided with a positioning hole corresponding to the positioning pin, and a tail end of the positioning pin penetrates through the positioning hole and is located in the placing area.

As a preferred technical solution, the positive-negative pressure circulating mechanism comprises a first mounting plate, a second mounting plate, a lifting cylinder, a venting block and a plugging block, a top end of the standing cavity is provided with an upper vacant position communicated with an interior of the standing cavity, the first mounting plate is arranged in the upper vacant position, the second mounting plate is located below the first mounting plate and in the standing cavity, the lifting cylinder is arranged at a top end of the first mounting plate, a tail end of an output shaft of the lifting cylinder penetrates through a through hole in the first mounting plate and is connected with a top end of the second mounting plate, the lifting cylinder is used for driving the second mounting plate to move up and down, the venting block and the plugging block are both arranged at a bottom end of the second mounting plate, a tail end of the venting block is used for matching with an air inlet of the electrolyte injection capsule, a tail end of the plugging block is used for matching with an electrolyte injection port of the electrolyte injection capsule, the top end of the second mounting plate is provided with a standing joint corresponding to the venting block, the standing joint is communicated with an interior of the venting block, and the standing joint is used for connecting with a vacuumizing device.

The present invention has the beneficial effects that: according to the present invention, the interior of the battery in the electrolyte injection capsule may be vacuumized and introduced with nitrogen alternately to infiltrate the battery in a breathing manner at a high temperature, so that the electrolyte injected into the battery can rapidly and fully infiltrate the interior of the battery cell, thus improving the production efficiency.

### DESCRIPTION OF THE DRAWINGS

The present invention is further described hereinafter with reference to the drawings and embodiments.
FIG. 1 is a plane diagram of a battery standing device provided by an embodiment of the present invention;
FIG. 2 is a schematic structural diagram of a plurality of standing units of the battery standing device as shown in FIG. 1;
FIG. 3 is a schematic structural diagram of a standing cavity, an auxiliary energizing mechanism and a positive-negative pressure circulating mechanism of the standing unit as shown in FIG. 2;
FIG. 4 is a right view of the standing cavity, the auxiliary energizing mechanism and the positive-negative pressure circulating mechanism as shown in FIG. 3;
FIG. 5 is a top view of a standing bottom plate, a standing top plate and the auxiliary energizing mechanism as shown in FIG. 3;
FIG. 6 is a front view of the standing bottom plate, the standing top plate and the auxiliary energizing mechanism as shown in FIG. 5;
FIG. 7 is an exploded view of the standing bottom plate, the standing top plate and the auxiliary energizing mechanism as shown in FIG. 5;
FIG. 8 is a schematic structural diagram of the positive-negative pressure circulating mechanism as shown in FIG. 3;
FIG. 9 is a front view of the positive-negative pressure circulating mechanism as shown in FIG. 8;
FIG. 10 is an exploded view of the positive-negative pressure circulating mechanism as shown in FIG. 8;
FIG. 11 is a schematic structural diagram of an electrolyte injection capsule;
FIG. 12 is a sectional view of the electrolyte injection capsule and a battery; and
FIG. 13 is a flow block diagram of a battery standing method provided on the basis of the battery standing device as shown in FIG. 1.

### DETAILED DESCRIPTION OF PREFERRED EMBODIMENTS

The concept, specific structure and generated technical effect of the present invention are clearly and completely described hereinafter with reference to the embodiments and the drawings to fully understand the objectives, features and effects of the present invention. Obviously, the described embodiments are only some but not all of the embodiments of the present invention, and based on the embodiments of the present invention, other embodiments obtained by those skilled in the art without going through any creative work all belong to the scope of protection of the present invention. In addition, all joint/connection relationships involved in the patent do not indicate direct connection between members only, but indicate that a better joint structure may be formed by adding or reducing a joint accessory according to specific implementation conditions. Various technical features in the present invention may be combined mutually on the premise of not conflicting with each other.

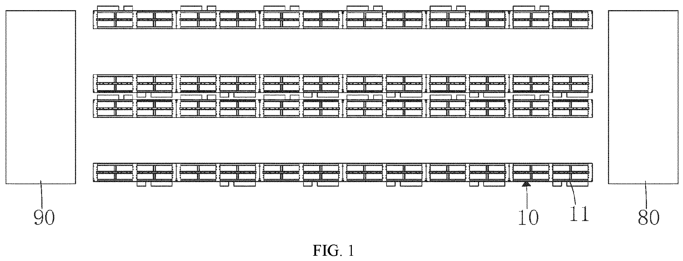

With reference to FIG. 1, a battery standing device provided by an embodiment of the present invention comprises a standing unit 10, a first transfer conveying line 80 and a second transfer conveying line 90. The standing unit 10 is located between the first transfer conveying line 80 and the second transfer conveying line 90. The first transfer conveying line 80 and the second transfer conveying line 90 are oppositely arranged left and right. When there are a plurality of standing units 10, such as four standing units, the four standing units 10 are sequentially arranged from front to back. In the four static units 10, two standing units 10 located in the middle, comprising a second standing unit 10 and a third standing unit 10, are close to each other and arranged in mirror images, a first standing unit 10 and the second standing unit 10 are oppositely arranged front and back, the third standing unit 10 and a fourth standing unit 10 are oppositely arranged front and back, a passage is formed between the second standing unit 10 and the first standing unit 10 and a passage is formed between the third standing unit 10 and the fourth standing unit 10, and the arrangement of the passages is convenient for a stacker crane to move. It can be understood that a number of the standing units 10 may be set according to an actual situation.

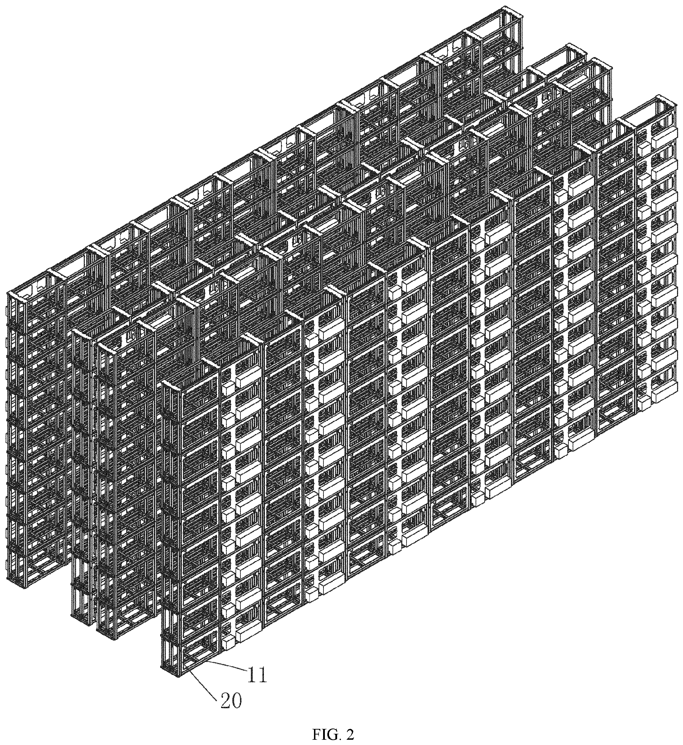

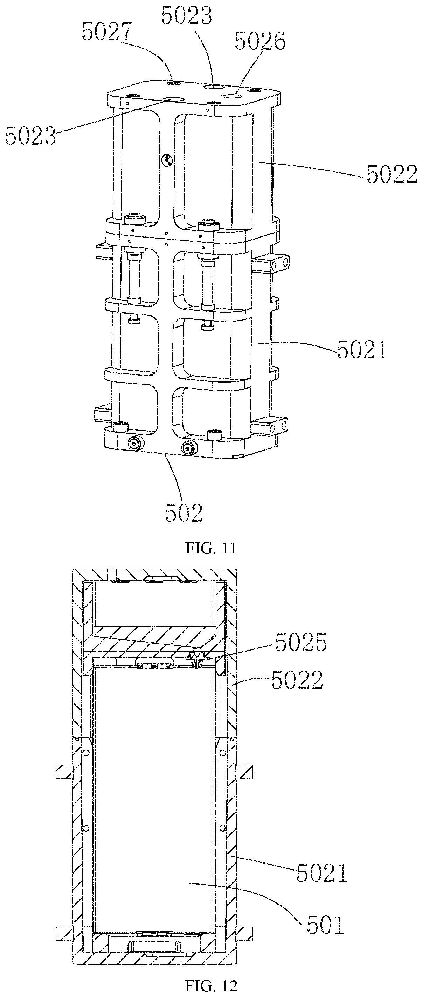

As shown in FIG. 2, the standing unit 10 comprises a standing stereoscopic storage 11. In this embodiment, there are a plurality of standing stereoscopic storages 11, such as twelve standing stereoscopic storages, and the twelve standing stereoscopic storages 11 are sequentially connected from left to right. It can be understood that a number of the standing stereoscopic storages 11 may be, for example, one, two, etc., and may be set according to an actual situation. The standing stereoscopic storage 11 comprises a standing cavity 20, and the standing cavity 20 is used for placing an electrolyte injection capsule 502 and a battery 501 in the electrolyte injection capsule 502, as shown in FIG. 11 and FIG. 12. In this embodiment, there are a plurality of standing cavities 20, such as nine standing cavities, and the nine standing cavities 20 are sequentially stacked from bottom to top. It can be understood that a number of the standing cavities 20 may be, for example, one, two, etc., and may be set according to an actual situation.

As shown in FIG. 11 and FIG. 12, the electrolyte injection capsule 502 has an existing structure, and the electrolyte injection capsule 502 comprises a lower cavity 5021 and a button cup 5022 (which is an upper cavity) covering a top end of the lower cavity 5021. An inner wall of the lower cavity 5021 is provided with a heating plate, a bottom end of the lower cavity 5021 is provided with a negative probe assembly, a positive probe assembly and a lower positioning groove, the negative probe assembly comprises four negative probes and the positive probe assembly comprises four positive probes, the negative probes and the positive probes are electrically connected with a negative electrode and a positive electrode of the heating plate respectively, and two lower positioning grooves are provided. A top end of the button cup 5022 is provided with an electrolyte injection port 5026, an air inlet 5023 and an upper positioning groove 5027, a first inner cavity and a second inner cavity located below the first inner cavity are arranged in the button cup 5022, the electrolyte injection port 5026 and the air inlet 5023 are both communicated with the first inner cavity, the second inner cavity is communicated with an interior of the lower cavity 5021, two air inlets 5023 are provided, and four upper positioning grooves 5027 are provided. A top portion of the second inner cavity is provided with an electrolyte injection nozzle 5025, and the electrolyte injection nozzle 5025 is communicated with the first inner cavity.

The standing cavity 20 is provided with an auxiliary energizing mechanism and a positive-negative pressure circulating mechanism 40. The auxiliary energizing mechanism is used for electrically connecting with a power supply and used for electrically connecting with the positive probes and the negative probes at a bottom portion of the lower cavity 5021 of the electrolyte injection capsule 502. In practical application, the power supply may supply power to the heating plate of the electrolyte injection capsule 502 through the auxiliary energizing mechanism, and the positive probes and the negative probes of the electrolyte injection capsule 502, and the heating plate is electrified to generate heat to heat the battery 501 in the electrolyte injection capsule 502. The positive-negative pressure circulating mechanism 40 is used for connecting with a vacuumizing device, used for docking with the air inlet 5023 of the electrolyte injection capsule 502 and used for plugging the electrolyte injection port 5026 of the electrolyte injection capsule 502. In practical application, the vacuumizing device vacuumizes the first inner cavity of the button cup 5022 of the electrolyte injection capsule 502 and introduces nitrogen through the positive-negative pressure circulating mechanism 40 alternately to vacuumize the battery 501 in the electrolyte injection capsule 502 and introduce nitrogen alternately.

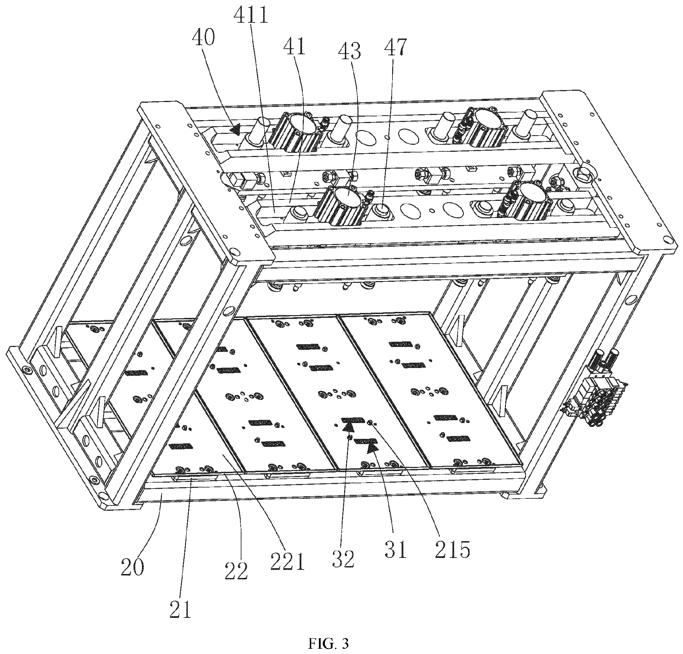

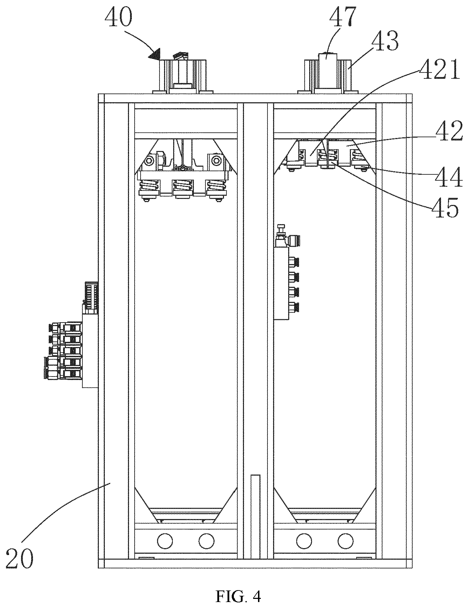

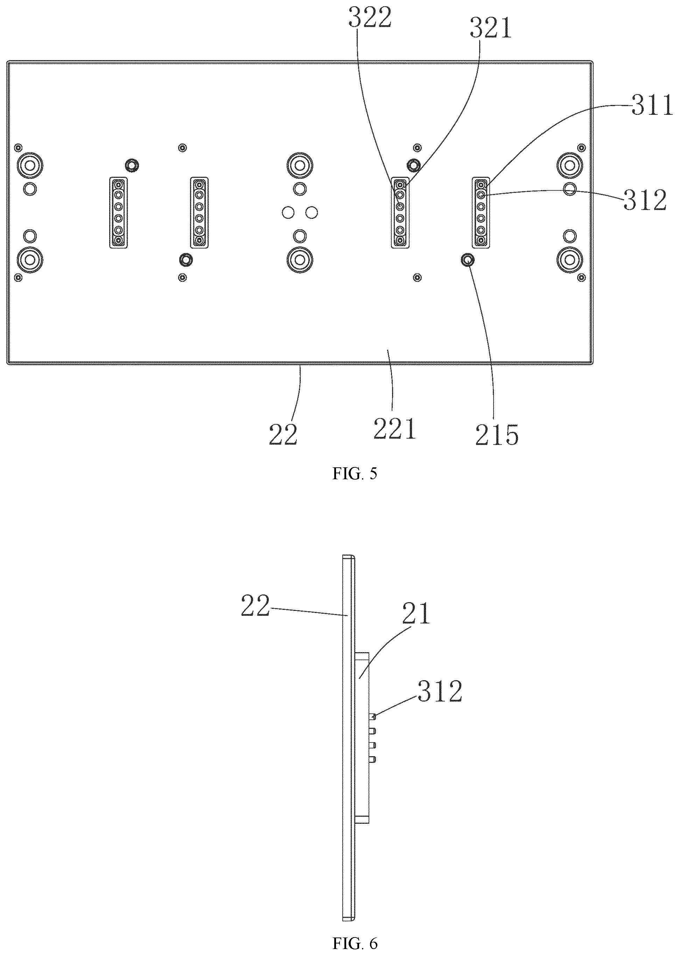

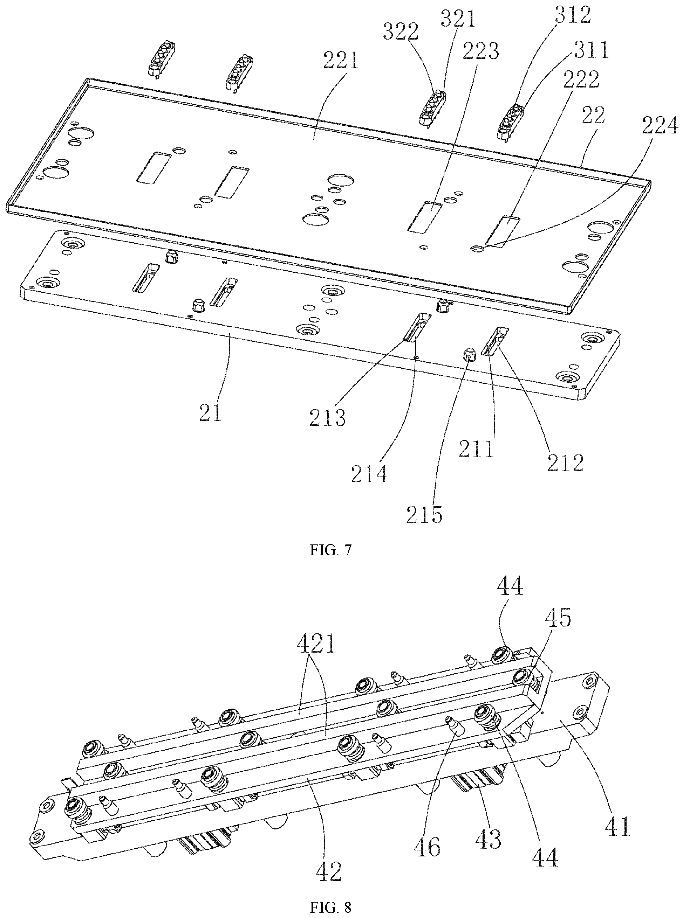

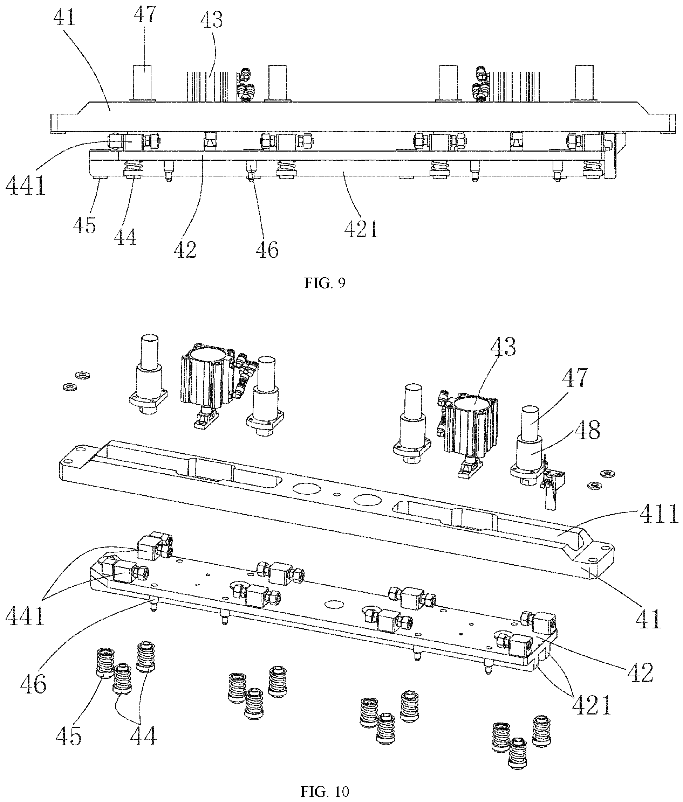

Specifically, as shown in FIG. 3 to FIG. 10, a bottom portion in the standing cavity 20 is provided with a standing bottom plate 21, and a top end of the standing bottom plate 21 is provided with a standing top plate 22. Length directions of the standing bottom plate 21 and the standing top plate 22 are both the same as a width direction of the standing cavity 20. The top end of the standing bottom plate 21 is provided with a first mounting groove 211 and a second mounting groove 213, length directions of the first mounting groove 211 and the second mounting groove 213 are both the same as a width direction of the standing bottom plate 21, a bottom portion of the first mounting groove 211 is provided with a first hole position 212, and a bottom portion of the second mounting groove 213 is provided with a second hole position 214. A top end of the standing top plate 22 is provided with an internally concave placing area 221. A bottom portion of the placing area 221 is provided with a first avoidance hole 222 corresponding to the first mounting groove 211 and a second avoidance hole 223 corresponding to the second mounting groove 213. The placing area 221 is used for placing the electrolyte injection capsule 502 and the battery 501 in the electrolyte injection capsule 502.

The auxiliary energizing mechanism comprises a first probe assembly 31 and a second probe assembly 32.

The first probe assembly 31 comprises a first probe sleeve 311 and a first probe 312 penetrating through the first probe sleeve 311. A length direction of the first probe sleeve 311 is the same as a length direction of the first mounting groove 211, and the first probe sleeve 311 is arranged in the first mounting groove 211. An upper end of the first probe 312 penetrates through the first avoidance hole 222 and is located in the placing area 221. In practical application, the first probe 312 corresponds to the positive electrode probe of the electrolyte injection capsule 502, and the upper end of the first probe 312 is used for docking with the positive electrode probe of the electrolyte injection capsule 502 to electrically connect with the positive electrode probe of the electrolyte injection capsule 502. A lower end of the first probe 312 penetrates through the first hole position 212 and is located in a lower vacant position at the bottom portion in the standing cavity 20, and the lower end of the first probe 312 is used for electrically connecting with a positive electrode of the power supply. The second probe assembly 32 comprises a second probe sleeve 321 and a second probe 322 penetrating through the second probe sleeve 321. A length direction of the second probe sleeve 321 is the same as a length direction of the second mounting groove 213, and the second probe sleeve 321 is arranged in the second mounting groove 213. An upper end of the second probe 322 penetrates through the second avoidance hole 223 and is located in the placing area 221. In practical application, the second probe 322 corresponds to the negative electrode probe of the electrolyte injection capsule 502, and the upper end of the second probe 322 is used for docking with the negative electrode probe of the electrolyte injection capsule 502 to electrically connect with the negative electrode probe of the electrolyte injection capsule 502. A lower end of the second probe 322 penetrates through the second hole position 214 and is located in the lower vacant position at the bottom portion in the standing cavity 20, and the lower end of the second probe 322 is used for electrically connecting with a negative electrode of the power supply. There are four positive electrode probes and four negative electrode probes of the electrolyte injection capsule 502, so that there are four first probes 312 and four second probes 322 in this embodiment. The four first probes 312 are arranged at intervals in the length direction of the first probe sleeve 311, and the four second probes 322 are arranged at intervals in the length direction of the second probe sleeve 321. In practical application, the lower end of the first probe 312 and the lower end of the second probe 322 are electrically connected with the positive electrode and the negative electrode of the power supply through power supply lines, the power supply is, for example, an electric box, etc., the power supply line is provided with a switch, and the lower end of the first probe 312 and the lower end of the second probe 322 may be connected with or disconnected from the power supply by turning on or off the switches.

The top end of the standing bottom plate 21 is provided with a positioning pin 215, a bottom portion of the placing area 221 is provided with a positioning hole 224 corresponding to the positioning pin 215, and a tail end of the positioning pin 215 penetrates through the positioning hole 224 and is located in the placing area 221. In practical application, the positioning pin 215 corresponds to the lower positioning groove of the electrolyte injection capsule 502, and the tail end of the positioning pin 215 is used for matching with the lower positioning groove to position the bottom end of the lower cavity 5021 of the electrolyte injection capsule 502, which is convenient for docking the upper end of the first probe 312 with the positive electrode probe and docking the upper end of the second probe 322 with the negative electrode probe. Two lower positioning grooves of the electrolyte injection capsule 502 are provided, so that two positioning pins 215 are provided in this embodiment.

The positive-negative pressure circulating mechanism 40 comprises a first mounting plate 41, a second mounting plate 42, a lifting cylinder 43, a venting block 44 and a plugging block 45.

A top end of the standing cavity 20 is provided with an upper vacant position communicated with an interior of the standing cavity 20, and the first mounting plate 41 is arranged in the upper vacant position. The second mounting plate 42 is located below the first mounting plate 41 and in the standing cavity 20. A top end of the first mounting plate 41 is provided with a groove position 411, the lifting cylinder 43 is arranged at a bottom portion of the groove position 411, the lifting cylinder 43 partially protrudes from the top end of the first mounting plate 41, the bottom portion of the groove position 411 is provided with a through hole, a tail end of an output shaft of the lifting cylinder 43 penetrates through the through hole in the first mounting plate 41 and is connected with a top end of the second mounting plate 42, and the lifting cylinder 43 is used for driving the second mounting plate 42 to move up and down. Two air inlets 5023 of the electrolyte injection capsule 502 are provided, so that two venting blocks 44 are provided, and the venting blocks 44 are hollow. The two venting blocks 44 and the plugging block 45 are all arranged at a bottom end of the second mounting plate 42. In practical application, the two venting blocks 44 and the plugging block 45 respectively correspond to the two air inlets 5023 and the electrolyte injection port 5026 of the electrolyte injection capsule 502, as shown in FIG. 11 and FIG. 12. Tail ends of the two venting blocks 44 are respectively used for matching with the two air inlets 5023 of the electrolyte injection capsule 502 to dock with the two air inlets 5023 of the electrolyte injection capsule 502, and a tail end of the plugging block 45 is used for matching with the electrolyte injection port 5026 of the electrolyte injection capsule 502 to plug the electrolyte injection port 5026 of the electrolyte injection capsule 502, so that the first inner cavity of the button cup 5022 of the electrolyte injection capsule 502 is not communicated with an external environment.

The top end of the second mounting plate 42 is provided with a vacuumizing hole position corresponding to the venting block 44, and the vacuumizing hole position is communicated with an interior of the venting block 44. The top end of the second mounting plate 42 is provided with a standing joint 441 in a position corresponding to the vacuumizing hole position, the standing joint 441 is located between the second mounting plate 42 and the first mounting plate 41, the standing joint 441 is communicated with the vacuumizing hole position, the standing joint 441 is used for connecting with the vacuumizing device, and the vacuumizing device is, for example, a vacuum pump with dual functions of pumping and inflating. Two venting blocks 44 are provided in this embodiment, so that two vacuumizing hole positions and two standing joints 441 are also provided respectively. In practical application, the two standing joints 441 are both connected with one vacuum pipeline, the vacuum pipeline is connected with the vacuumizing device, and an electromagnetic valve is arranged on the vacuum pipeline. The two standing joints 441 may be connected with or disconnected from the vacuumizing device by switching on or off the electromagnetic valve. An up-and-down movement of the second mounting plate 42 may drive the venting block 44, the plugging block 45 and the standing joint 441 to move up and down.

The top end of the second mounting plate 42 is provided with two guide posts 47, a bottom portion of the groove position 411 is provided with two via holes, and top ends of the two guide posts 47 respectively penetrate through the two via holes of the groove position 411 and are located above the first mounting plate 41. The up-and-down movement of the second mounting plate 42 may drive the two guide posts 47 to move up and down, and the guide posts 47 play a guiding role in the up-and-down movement of the second mounting plate 42. It can be understood that a number of the guide posts 47 may be set according to an actual situation. Two linear bearing 48 respectively penetrate through the two via holes of the groove position 411, the two linear bearings 48 are respectively sleeved on peripheries of the two guide posts 47, and the linear bearing 48 provides support for an up-and-down movement of the corresponding guide post 47.

The bottom end of the second mounting plate 42 is provided with a positioning member 46. In practical application, the positioning member 46 corresponds to the upper positioning groove 5027 of the electrolyte injection capsule 502, and a tail end of the positioning member 46 is used for matching with the upper positioning groove 5027 of the electrolyte injection capsule 502 to position the top end of the button cup 5022 of the electrolyte injection capsule 502, which is convenient for matching a tail end of the venting block 44 with the air inlet 5023 of the electrolyte injection capsule 502 and matching a tail end of the plugging block 45 with the electrolyte injection port 5026 of the electrolyte injection capsule 502. Four upper positioning grooves 5027 of the electrolyte injection capsule 502 are provided, so that four positioning members 46 are provided in this embodiment.

Two bumps 421 are formed at the bottom end of the second mounting plate 42, the two bumps 421 are arranged at an interval, length directions of the bumps 421 are the same as a length direction of the second mounting plate 42, the plugging block 45 is located between the two bumps 421, and the two bumps 421 are located between the two venting blocks 44. The tail end of the venting block 44, the tail end of the plugging block 45 and the tail end of the positioning member 46 all protrude from the bottom end of the bump 421. The up-and-down movement of the second mounting plate 42 may drive the two bumps 421 to move up and down, and the bumps 421 are used for abutting against the top end of the button cup 5022 of the electrolyte injection capsule 502.

In practical application, after the battery 501 is filled with the electrolyte, the battery 501 is put into the electrolyte injection capsule 502. Specifically, the button cup 5022 of the electrolyte injection capsule 502 is taken off from the top end of the lower cavity 5021 of the electrolyte injection capsule 502, and then the battery 501 subjected to electrolyte injection is put into the lower cavity 5021 of the electrolyte injection capsule 502. At this time, the battery 501 partially protrudes from the lower cavity 5021 of the electrolyte injection capsule 502, then the button cup 5022 of the electrolyte injection capsule 502 covers the top end of the lower cavity 5021 of the electrolyte injection capsule 502, and a part of the battery 501 protruding from the top end of the lower cavity 5021 of the electrolyte injection capsule 502 is located in the first inner cavity of the button cup 5022 of the electrolyte injection capsule 502 and the electrolyte injection port 5011 of the battery 501 is matched with a lower end of the electrolyte injection nozzle 5025 of the button cup 5022, as shown in FIG. 12, so that the battery 501 subjected to electrolyte injection is put into the electrolyte injection capsule 502. Subsequently, the electrolyte injection capsule 502 and the battery 501 in the electrolyte injection capsule 502 are conveyed to the standing unit 10 through the first transfer conveying line 80.

Subsequently, the electrolyte injection capsule 502 on the first transfer conveying line 80 and the battery 501 in the electrolyte injection capsule 502 are transported to the placing area 221 in the standing cavity 20 by a stacker crane 100, the upper end of the first probe 312 is docked with the positive electrode probe of the electrolyte injection capsule 502 and the upper end of the second probe 322 is docked with the negative electrode probe of the electrolyte injection capsule 502, and the tail end of the positioning pin 215 is matched with the lower positioning groove of the electrolyte injection capsule 502, so that the upper end of the first probe 312 is electrically connected with the positive electrode probe and the upper end of the second probe 322 is electrically connected with the negative electrode probe, and the bottom end of the lower cavity 5021 of the electrolyte injection capsule 502 may be positioned by the positioning pin 215. Subsequently, the lower end of the first probe 312 and the lower end of the second probe 322 are connected with the power supply, so that the power supply may be electrically connected with the positive electrode of the heating plate of the electrolyte injection capsule 502 through the first probe 312 and the positive electrode probe of the electrolyte injection capsule 502 and may be electrically connected with the negative electrode of the heating plate of the electrolyte injection capsule 502 through the second probe 322 and the negative electrode probe of the electrolyte injection capsule 502. Therefore, the heating plate of the electrolyte injection capsule 502 may be electrified by the power supply, and the heating plate generates heat after being electrified, so that the battery 501 in the lower cavity 5021 of the electrolyte injection capsule 502 may be heated, for example, at a heating temperature of 40°C to 50°C, preferably 45°C.

Subsequently, the lifting cylinder 43 drives the second mounting plate 42 to move downwards, so that the venting block 44, the plugging block 45, the standing joint 441, the positioning member 46 and the two bumps 421 may be driven to move downwards, until the tail end of the venting block 44 is matched with the air inlet 5023 of the electrolyte injection capsule 502, the tail end of the plugging block 45 is matched with the electrolyte injection port 5026 of the electrolyte injection capsule 502, the tail end of the positioning member 46 is matched with the upper positioning groove 5027 of the electrolyte injection capsule 502, and the two bumps 421 respectively abut against the top end of the button cup 5022 of the electrolyte injection capsule 502, so that the venting block 44 may be docked with the air inlet 5023 of the electrolyte injection capsule 502, the electrolyte injection port 5026 of the electrolyte injection capsule 502 may be plugged by the plugging block 45, the top end of the button cup 5022 of the electrolyte injection capsule 502 may be positioned by the positioning member 46, and the button cup 5022 of the electrolyte injection capsule 502 may be tightly pressed by the two bumps 421.

Subsequently, the standing joint 441 is connected with the vacuumizing device, and then the first inner cavity of the button cup 5022 of the electrolyte injection capsule 502 is vacuumized and introduced with nitrogen through the vacuum pipeline, the standing joint 441, the vacuumizing hole position and the interior of the venting block 44 by the vacuumizing device alternately. Because the lower end of the electrolyte injection nozzle 5025 of the electrolyte injection capsule 502 is matched with the electrolyte injection port 5011 of the battery 501, the interior of the battery 501 in the electrolyte injection capsule 502 is vacuumed and introduced with nitrogen through the first inner cavity of the button cup 5022 and the electrolyte injection nozzle 5025 of the electrolyte injection capsule 502 alternately to infiltrate the battery 501 in a breathing manner at a high temperature. Therefore, the battery 501 is subjected to high temperature + positive-negative pressure circulating standing processing, so that the electrolyte injected into the battery 501 can rapidly and fully infiltrate an interior of a cell of the battery 501, thus improving the production efficiency.

The first inner cavity of the button cup 5022 of the electrolyte injection capsule 502 is vacuumed and introduced with nitrogen through the vacuum pipeline, the standing joint 441, the vacuumizing hole position and the venting block 44 by the vacuumizing device alternately to vacuumize the interior of the battery 501 in the electrolyte injection capsule 502 and introduce nitrogen alternately. Specifically, nitrogen is introduced into the button cup 5022 of the electrolyte injection capsule 502 through the standing joint 441, the vacuumizing hole position and the interior of the venting block 44 by the vacuumizing device first to introduce the nitrogen into the interior of the battery 501 in the electrolyte injection capsule 502, so that *a positive pressure* is generated in the interior of the battery 501, the pressure is 0.3 MPa to 0.5 MPa (Megapascal), preferably 0.4 Mpa, and the pressure is kept for 3 hours to 4 hours, preferably 3.5 hours. Subsequently, the first inner cavity of the button cup 5022 of the electrolyte injection capsule 502 is vacuumized through the standing joint 441, the vacuumizing hole position and the interior of the venting block 44 by the vacuumizing device to vacuumize the interior of the battery 501 in the electrolyte injection capsule 502, so that a negative pressure is generated in the interior of the battery 501, the pressure is -55 Kpa to -65 Kpa (Kilopascal), preferably -60 Kpa, and the pressure is kept for 0.2 hour to 1 hour, preferably 0.5 hours. Subsequently, these two steps are repeated for 4 to 6 times, preferably 5 times.

After the standing processing is finished, the lower end of the first probe 312 and the lower end the second probe 322 are disconnected from the power supply and the standing joint 441 is disconnected from the vacuumizing device, and the second mounting plate 42 is driven to move downwards by the lifting cylinder 43 to drive the venting block 44, the plugging block 45, the standing joint 441, the positioning member 46 and the two bumps 421 to move upwards to initial positions, so that the venting block 44 is separated from the air inlet 5023 of the electrolyte injection capsule 502, the plugging block 45 is separated from the electrolyte injection port 5026 of the electrolyte injection capsule 502, the positioning member 46 is separated from the upper positioning groove 5027 of the electrolyte injection capsule 502, and the two bumps 421 are separated from the top end of the button cup 5022 of the electrolyte injection capsule 502, then the electrolyte injection capsule 502 in the standing cavity 20 and the battery 501 in the electrolyte injection capsule 502 are transported to the second transfer conveying line 90 by the stacker crane, and then the electrolyte injection capsule 502 and the battery 501 in the electrolyte injection capsule 502 are transported to the next process through the second transfer conveying line 90.

In this embodiment, four standing bottom plates 21 and four standing top plates 22 are provided at the bottom portion in each standing cavity 20, two electrolyte injection capsules 502 may be put in each placing area 221, and two auxiliary energizing mechanisms are provided on each standing bottom plate 21 and standing top plate 22, so that eight electrolyte injection capsules 502 may be put in each standing cavity 20, and two positive-negative pressure circulating mechanisms 40 are provided in each standing cavity 20. Each positive-negative pressure circulating mechanism 40 is provided with eight venting blocks 44, four plugging blocks 45, eight standing joints 441 and eight vacuumizing hole positions, each positive-negative pressure circulating mechanism 40 is provided with two lifting cylinders 43, two groove positions 411, four guide posts 47 and four linear bearings 48, and the two groove positions 411 are arranged at an interval in the length direction of the first mounting plate 41, so that each standing cavity 20 in the present invention may realize high temperature-positive-negative pressure circulating standing processing on the batteries 501 in eight electrolyte injection capsules 502 at one time. However, nine standing cavities 20 are provided in each standing stereoscopic storage 11, and twelve standing stereoscopic storages 11 are provided in each standing unit 10 to realize high temperature-positive-negative pressure circulating standing processing on a plurality of batteries 501 at one time, thus improving the production efficiency. It can be understood that numbers of various components may be set according to an actual situation.

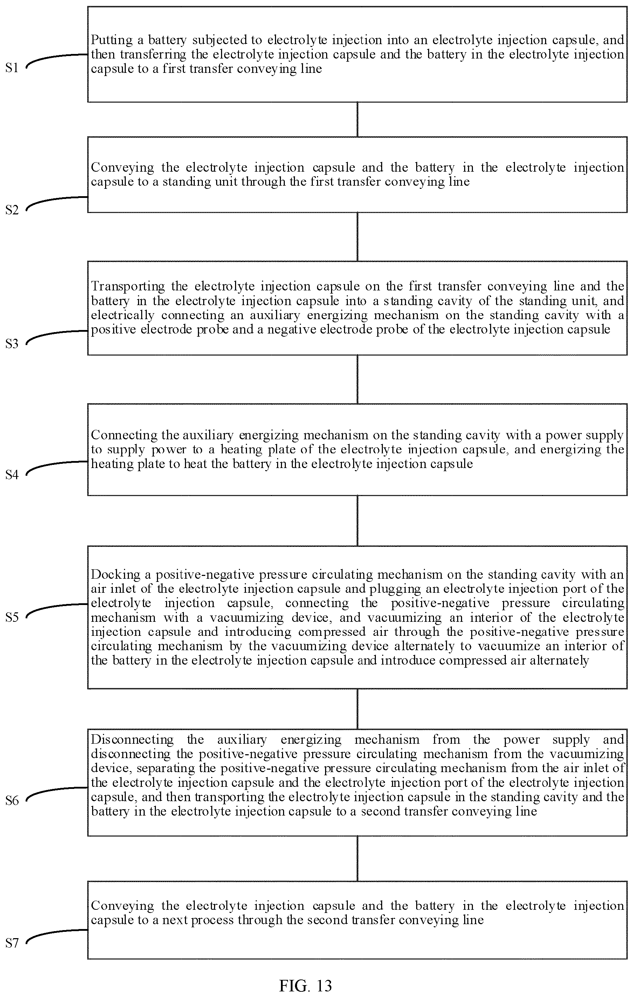

With reference to FIG. 13, the present invention further provides a battery standing method on the basis of the battery standing device above, which specifically comprises the following steps.

In S1, the battery 501 subjected to electrolyte injection is put into the electrolyte injection capsule 502, and then the electrolyte injection capsule 502 and the battery 501 in the electrolyte injection capsule 502 are transferred to the first transfer conveying line 80.

In S2, the electrolyte injection capsule 502 and the battery 501 in the electrolyte injection capsule 502 are conveyed to the standing unit 10 through the first transfer conveying line 80.

In S3, the electrolyte injection capsule 502 on the first transfer conveying line 80 and the battery 501 in the electrolyte injection capsule 502 are transported into the standing cavity 20 of the standing unit 10, which specifically refers to transporting to the placing area 221 of the standing top plate 22 at the bottom portion in the standing cavity 20, and the upper end of the first probe 312 of the auxiliary energizing mechanism on the standing cavity 20 is docked with the positive electrode probe of the electrolyte injection capsule 502 to electrically connect with the positive electrode probe and the upper end of the second probe 322 of the auxiliary energizing mechanism is docked with the negative electrode probe of the electrolyte injection capsule 502 to electrically connect with the negative electrode probe.

In S4, the lower end of the first probe 312 and the lower end of the second probe 322 of the auxiliary energizing mechanism on the standing cavity 20 are connected with the power supply to supply power to the heating plate of the electrolyte injection capsule 502, and the heating plate is electrified to heat the battery 501 in the electrolyte injection capsule 502 at a heating temperature of 40°C to 50°C, preferably 45°C.

In S5, the positive-negative pressure circulating mechanism 40 on the standing cavity 20 is docked with the two air inlets 5023 of the electrolyte injection capsule 502 and the electrolyte injection port 5026 of the electrolyte injection capsule 502 is plugged, the positive-negative pressure circulating mechanism 40 is connected with the vacuumizing device, and the first inner cavity of the button cup 5022 of the electrolyte injection capsule 502 is vacuumized and introduced with nitrogen through the positive-negative pressure circulating mechanism 40 by the vacuumizing device alternately to vacuumize the interior of the battery 501 in the electrolyte injection capsule 502 and introduce nitrogen alternately, so that the battery 501 is infiltrated in a breathing manner at a high temperature, thus realizing high temperature-positive-negative pressure circulating standing processing on the battery 501.

The step S5 comprises the following steps.

In S51, the venting block 44 and the plugging block 45 are driven to move close to the electrolyte injection capsule 502 by the lifting cylinder 43 of the positive-negative pressure circulating mechanism 40, so that the tail end of the venting block 44 is matched with the air inlet 5023 of the electrolyte injection capsule 502 and the tail end of the plugging block 45 is matched with the electrolyte injection port 5026 of the electrolyte injection capsule 502 to dock with the air inlet 5023 of the electrolyte injection capsule 502 and plug the electrolyte injection port 5026 of the electrolyte injection capsule 502.

In S52, the standing joint 441 of the positive-negative pressure circulating mechanism 40 is connected with the vacuumizing device.

In S53, nitrogen is introduced into the first inner cavity of the button cup 5022 of the electrolyte injection capsule 502 through the standing joint 441, the vacuumizing hole position and the interior of the venting block 44 of the positive-negative pressure circulating mechanism 40 by the vacuumizing device to introduce the nitrogen into the interior of the battery 501 in the electrolyte injection capsule 502, so that the positive pressure is generated in the interior of the battery 501, the pressure is 0.3 MPa to 0.5 MPa, preferably 0.4 Mpa, and the pressure is kept for 3 hours to 4 hours, preferably 3.5 hours.

In S54, the first inner cavity of the button cup 5022 of the electrolyte injection capsule 502 is vacuumized through the standing joint 441, the vacuumizing hole position and the interior of the venting block 44 of the positive-negative pressure circulating mechanism 40 by the vacuumizing device to vacuumize the interior of the battery 501 in the electrolyte injection capsule 502, so that the negative pressure is generated in the interior of the battery 501, the pressure is -55 Kpa to -65 Kpa, preferably -60 Kpa, and the pressure is kept for 0.2 hour to 1 hour, preferably 0.5 hour.

In S55, the step S53 to the step S54 are repeated for 4 to 6 times, preferably 5 times.

In S6, the lower end of the first probe 312 and the lower end of the second probe 322 of the auxiliary energizing mechanism are disconnected from the power supply and the standing joint 441 of the positive-negative pressure circulating mechanism 40 is disconnected from the vacuumizing device, and the venting block 44 and the plugging block 45 are driven to move upwards to the initial positions through the lifting cylinder 43 of the positive-negative pressure circulating mechanism 40 to separate the venting block 44 from the air inlet 5023 of the electrolyte injection capsule 502 and separate the plugging block 45 from the electrolyte injection port 5026 of the electrolyte injection capsule 502, and then the electrolyte injection capsule 502 in the placing area 221 in the standing cavity 20 and the battery 501 in the electrolyte injection capsule 502 are transported to the second transfer conveying line 90 by the stacker crane.

In S7, the electrolyte injection capsule 502 and the battery 501 in the electrolyte injection capsule 502 is conveyed to the next process through the second transfer conveying line 90.

According to the present invention, the battery 501 subjected to electrolyte injection is put into the electrolyte injection capsule 502 first, and then the electrolyte injection capsule 502 and the battery 501 in the electrolyte injection capsule 502 are transferred to the first transfer conveying line 80; then the electrolyte injection capsule 502 and the battery 501 in the electrolyte injection capsule 502 are conveyed to the standing unit 10 through the first transfer conveying line 80; then the electrolyte injection capsule 502 on the first transfer conveying line 80 and the battery 501 in the electrolyte injection capsule 502 are transported into the standing cavity 20 of the standing unit 10, and the auxiliary energizing mechanism on the standing cavity 20 is electrically connected with the positive electrode probe and the negative electrode probe of the electrolyte injection capsule 502; then the auxiliary energizing mechanism on the standing cavity 20 is connected with the power supply to supply power to the heating plate of the electrolyte injection capsule 502, thus energizing the heating plate to heat the battery 501 in the electrolyte injection capsule 502; and then the positive-negative pressure circulating mechanism 40 on the standing cavity 20 is docked with the air inlet 5023 of the electrolyte injection capsule 502 and the electrolyte injection port 5026 of the electrolyte injection capsule 502 is plugged, and then the positive-negative pressure circulating mechanism 40 is connected with the vacuumizing device, so that the interior of the electrolyte injection capsule 502 is vacuumized and introduced with nitrogen through the positive-negative pressure circulating mechanism 40 by the vacuumizing device alternately to vacuumize the interior of the battery 501 in the electrolyte injection capsule 502 and introduce nitrogen alternately. Therefore, the battery 501 may be infiltrated in a breathing manner at a high temperature, so that the electrolyte injected into the battery 501 can rapidly and fully infiltrate the interior of the cell of the battery 501, thus improving the production efficiency.

The above describe the preferred embodiments of the present invention in detail, but the present invention is not limited to the embodiments. Those skilled in the art may further make various equivalent modifications or substitutions without violating the spirit of the present invention, and these equivalent modifications or substitutions are all included in the scope defined by the claims of the present application.

## Claims

1. A battery standing method, **characterized in that**, comprising the following steps:
S1: putting a battery subjected to electrolyte injection into an electrolyte injection capsule, and then transferring the electrolyte injection capsule and the battery in the electrolyte injection capsule to a first transfer conveying line;
S2: conveying the electrolyte injection capsule and the battery in the electrolyte injection capsule to a standing unit through the first transfer conveying line;
S3: transporting the electrolyte injection capsule on the first transfer conveying line and the battery in the electrolyte injection capsule into a standing cavity of the standing unit, and electrically connecting an auxiliary energizing mechanism on the standing cavity with a positive electrode probe and a negative electrode probe of the electrolyte injection capsule;
S4: connecting the auxiliary energizing mechanism on the standing cavity with a power supply to supply power to a heating plate of the electrolyte injection capsule, and energizing the heating plate to heat the battery in the electrolyte injection capsule;
S5: docking a positive-negative pressure circulating mechanism on the standing cavity with an air inlet of the electrolyte injection capsule and plugging an electrolyte injection port of the electrolyte injection capsule, connecting the positive-negative pressure circulating mechanism with a vacuumizing device, and vacuumizing an interior of the electrolyte injection capsule and introducing nitrogen through the positive-negative pressure circulating mechanism by the vacuumizing device alternately to vacuumize an interior of the battery in the electrolyte injection capsule and introduce nitrogen alternately;
S6: disconnecting the auxiliary energizing mechanism from the power supply and disconnecting the positive-negative pressure circulating mechanism from the vacuumizing device, separating the positive-negative pressure circulating mechanism from the air inlet of the electrolyte injection capsule and the electrolyte injection port of the electrolyte injection capsule, and then transporting the electrolyte injection capsule in the standing cavity and the battery in the electrolyte injection capsule to a second transfer conveying line; and
S7: conveying the electrolyte injection capsule and the battery in the electrolyte injection capsule to a next process through the second transfer conveying line.

2. The battery standing method according to claim 1, **characterized in that**, in the step S3, the electrolyte injection capsule on the first transfer conveying line and the battery in the electrolyte injection capsule are transported to a placing area at a bottom portion of the standing cavity.

3. The battery standing method according to claim 2, **characterized in that**, in the step S3, an upper end of a first probe of the auxiliary energizing mechanism is electrically connecting with the positive electrode probe of the electrolyte injection capsule and an upper end of a second probe of the auxiliary energizing mechanism is electrically connecting with the negative electrode probe of the electrolyte injection capsule, in the step S4, a lower end of the first probe and a lower end of the second probe of the auxiliary energizing mechanism are respectively connected with the power supply, and in the step S6, the lower end of the first probe and the lower end of the second probe of the auxiliary energizing mechanism are disconnected from the power supply.

4. The battery standing method according to claim 1, **characterized in that**, in the step S4, the heating plate heats the battery in the electrolyte injection capsule at a heating temperature of 40°C to 50°C.

5. The battery standing method according to claim 1, **characterized in that**, the step S5 comprises the following steps:
S51: driving a venting block and a plugging block to move close to the electrolyte injection capsule by a lifting cylinder of the positive-negative pressure circulating mechanism, so that a tail end of the venting block is matched with the air inlet of the electrolyte injection capsule and a tail end of the plugging block is matched with the electrolyte injection port of the electrolyte injection capsule to dock with the air inlet of the electrolyte injection capsule and plug the electrolyte injection port of the electrolyte injection capsule;
S52: connecting a standing joint of the positive-negative pressure circulating mechanism with the vacuumizing device;
S53: introducing nitrogen into an interior of the electrolyte injection capsule through the standing joint and the venting block of the positive-negative pressure circulating mechanism by the vacuumizing device to introduce the nitrogen into the interior of the battery in the electrolyte injection capsule, so that a positive pressure is generated in the interior of the battery, the pressure is 0.3 MPa to 0.5 MPa, and the pressure is kept for 3 hours to 4 hours;
S54: vacuumizing the interior of the electrolyte injection capsule through the standing joint and the venting block of the positive-negative pressure circulating mechanism by the vacuumizing device to vacuumize the interior of the battery in the electrolyte injection capsule, so that a negative pressure is generated in the interior of the battery, the pressure is -55 Kpa to -65 Kpa, and the pressure is kept for 0.2 hour to 1 hour; and
S55: repeating the step S53 to the step S54 for 4 to 6 times.

6. A battery standing device, **characterized in that**, comprising a standing unit, a first transfer conveying line and a second transfer conveying line, wherein the standing unit is located between the first transfer conveying line and the second transfer conveying line, the standing unit comprises a standing stereoscopic storage, the standing stereoscopic storage comprises a standing cavity, the standing cavity is used for placing an electrolyte injection capsule and a battery in the electrolyte injection capsule, and an auxiliary energizing mechanism and a positive-negative pressure circulating mechanism are arranged on the standing cavity.

7. The battery standing device according to claim 6, **characterized in that**, a bottom portion of the standing cavity is provided with a standing bottom plate, a top end of the standing bottom plate is provided with a standing top plate, and a top end of the standing top plate is provided with a placing area.

8. The battery standing device according to claim 7, **characterized in that**, the auxiliary energizing mechanism comprises a first probe assembly and a second probe assembly, the first probe assembly comprises a first probe sleeve and a first probe penetrating through the first probe sleeve, the top end of the standing bottom plate is provided with a first mounting groove, a bottom portion of the first mounting groove is provided with a first hole position, the top end of the standing top plate is provided with a first avoidance hole corresponding to the first mounting groove, the first probe sleeve is arranged in the first mounting groove, an upper end of the first probe penetrates through the first avoidance hole and is located in the placing area, the upper end of the first probe is used for electrically connecting with a positive electrode probe of the electrolyte injection capsule, a lower end of the first probe penetrates through the first hole position and is located in a lower vacant position at the bottom portion in the standing cavity, the lower end of the first probe is used for electrically connecting with a positive electrode of the power supply, the second probe assembly comprises a second probe sleeve and a second probe penetrating through the second probe sleeve, a top end of the standing bottom plate is provided with a second mounting groove, a bottom portion of the second mounting groove is provided with a second hole position, a top end of the standing top plate is provided with a second avoidance hole corresponding to the second mounting groove, the second probe sleeve is arranged in the second mounting groove, an upper end of the second probe penetrates through the second avoidance hole and is located in the placing area, the upper end of the second probe is used for electrically connecting with a negative electrode probe of the electrolyte injection capsule, a lower end of the second probe penetrates through the second avoidance hole and is located in the lower vacant position at the bottom portion in the standing cavity, and the lower end of the second probe is used for electrically connecting with a negative electrode of the power supply.

9. The battery standing device according to claim 8, **characterized in that**, the top end of the standing bottom plate is provided with a positioning pin, a bottom portion of the placing area is provided with a positioning hole corresponding to the positioning pin, and a tail end of the positioning pin penetrates through the positioning hole and is located in the placing area.

10. The battery standing device according to claim 6, **characterized in that**, the positive-negative pressure circulating mechanism comprises a first mounting plate, a second mounting plate, a lifting cylinder, a venting block and a plugging block, a top end of the standing cavity is provided with an upper vacant position communicated with an interior of the standing cavity, the first mounting plate is arranged in the upper vacant position, the second mounting plate is located below the first mounting plate and in the standing cavity, the lifting cylinder is arranged at a top end of the first mounting plate, a tail end of an output shaft of the lifting cylinder penetrates through a through hole in the first mounting plate and is connected with a top end of the second mounting plate, the lifting cylinder is used for driving the second mounting plate to move up and down, the venting block and the plugging block are both arranged at a bottom end of the second mounting plate, a tail end of the venting block is used for matching with an air inlet of the electrolyte injection capsule, a tail end of the plugging block is used for matching with an electrolyte injection port of the electrolyte injection capsule, the top end of the second mounting plate is provided with a standing joint corresponding to the venting block, the standing joint is communicated with an interior of the venting block, and the standing joint is used for connecting with a vacuumizing device.
